# EUROPEAN PATENT SPECIFICATION

(11) **EP 2 934 878 B1**
(45) Date of publication and mention of the grant of the patent: **21.09.2016**
(21) Application number: 13814713.7
(22) Date of filing: 10.12.2013
(51) Int. Cl.: B32B 7/12, B32B 25/04, B32B 25/14, B32B 1/08, B32B 25/08, B32B 27/34

(54) **LAMINATES OF FLUOROELASTOMER AND HEAT-RESISTANT ACRYLATE ELASTOMER**
LAMINATE AUS FLUORELASTOMER UND HITZEBESTÄNDIG ACRYLAT-ELASTOMER
STRATIFIÉS DE FLUOROÉLASTOMÈRE ET D´ÉLASTOMÈRE ACRYLATE RESISTANT À LA CHALEUR

(30) Priority: 18.12.2012 US 201261738558 P
(43) Date of publication of application: 28.10.2015
(73) Proprietor: E. I. du Pont de Nemours and Company, Wilmington, DE 19898 (US)
(72) Inventor: BRAULE, William, F-74160 Beaumont (FR)
(74) Representative: Dannenberger, Oliver Andre
(86) International application number: PCT/US2013/073971
(87) International publication number: WO 2014/099454

(56) References cited:
- EP-A2- 0 337 977
- WO-A1-2012/124544
- US-A- 5 777 033

## Description

### FIELD OF THE INVENTION

This invention relates to laminates comprising a fluoroelastomer layer and a heat-stabilized acrylate elastomer layer.

### BACKGROUND OF THE INVENTION

Fluoroelastomers are well known for their excellent resistance to hot air aging, as well as resistance to permeability and swelling by fuels such as gasoline, diesel, and biodiesel. The main drawback of fluoroelastomers is their high cost in use.

Polyacrylate elastomers have moderate resistance to hot air aging and to fuels, but have a lower cost in use than fluoroelastomers. As a result, it is known to combine a layer of fluoroelastomer and a layer of polyacrylate elastomer in laminate structures, so that the fluoroelastomer layer is in contact with the high temperature environment and/or fuel, while the polyacrylate elastomer layer provides mechanical strength for the article. Such constructions are particularly useful for automotive hoses. However, the moderate high temperature resistance of the polyacrylate elastomer layer can limit the use of such laminates in high temperature environments.

Surprisingly, it has now been found that when the polyacrylate layer in a laminate construction comprises a dispersion of 10 wt% to 60 wt% polyamide having a peak melting temperature greater than 160°C, the laminate exhibits enhanced properties. Specifically, the hot air aging resistance of the polyacrylate is significantly improved, thereby allowing the laminate to be used in more extreme use conditions.

### SUMMARY OF THE INVENTION

In one aspect, the present invention provides a curable laminate of polyamide-filled polyacrylate copolymer elastomer and fluoroelastomer comprising
A. a curable fluoroelastomer composition layer; and
B. a curable polyacrylate copolymer elastomer composition layer comprising
   a. a polymer blend comprising
      i. at least one polyacrylate copolymer elastomer comprising 1) at least 50 wt%, based on the total weight of the polyacrylate copolymer elastomer, of polymerized units of at least one monomer having the structure 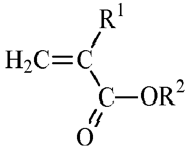 where R¹ is H or C₁-C₁₀ alkyl and R² is C₁-C₁₂ alkyl, C₁-C₂₀ alkoxyalkyl, C₁-C₁₂ cyanoalkyl, or C₁-C₁₂ fluoroalkyl; and 2) copolymerized units of a cure site monomer selected from the group consisting of unsaturated carboxylic acids, anhydrides of unsaturated carboxylic acids, unsaturated epoxides, and mixtures of two or more thereof; and
      ii. 10-60 wt.% of one or more polyamides having a melting peak temperature of at least 160°C;
      wherein A) the polymer blend has a green strength of less than 2 MPa as determined according to ASTM D6746-10, B) the one or more polyamides are present as a discontinuous phase in the polymer blend, and C) the weight percentages of the one or more amorphous acrylate copolymers and one or more polyamides are based on the combined weight of the one or more amorphous acrylate copolymers and one or more polyamides in the polymer blend; and
   b) an amine curative.

Another aspect of the invention is a process for production of a curable laminate having a layer of polyamide-filled acrylate copolymer elastomer composition and a layer of curable fluoroelastomer composition, the process comprising the steps of
A. providing one or more acrylate copolymer elastomers comprising
   a) at least 50 wt.%, based on the total weight of the amorphous acrylate copolymer, of polymerized units of at least one monomer having the structure 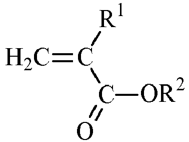 where R¹ is H or C₁-C₁₀ alkyl and R² is C₁-C₁₂ alkyl, C₁-C₂₀ alkoxyalkyl, C₁-C₁₂ cyanoalkyl, or C₁-C₁₂ fluoroalkyl; and
   b) copolymerized units of a cure site monomer selected from the group consisting of unsaturated carboxylic acids, anhydrides of unsaturated carboxylic acids, unsaturated epoxides, and mixtures of two or more thereof;
B. providing one or more polyamides having a melting peak temperature of at least 160°C;
C. mixing the polyacrylate copolymer elastomer and polyamide at a temperature greater than the melting peak temperatures of the one or more polyamides, thereby forming a polymer blend comprising 10 wt% to 60 wt% polyamide based on the total weight of the one or polyamides and one or more polyacrylates;
D. cooling the polymer blend to a temperature below the crystallization peak temperatures of the one or more polyamides, thereby forming a polyamide-filled polyacrylate copolymer elastomer composition that i) comprises a continuous amorphous acrylate copolymer elastomer phase and a discontinuous polyamide phase and ii) has a green strength of less than 2 MPa as determined according to ASTM D 6746-10;
E. adding amine curative to the polymer blend at a temperature less than the peak melting temperature of the polyamide to form a curable polyacrylate elastomer composition;
F. providing a curable fluoroelastomer composition; and
G. forming a laminate structure comprising a layer of the curable polyacrylate elastomer composition and a layer of the curable fluoroelastomer composition.

### DETAILED DESCRIPTION OF THE INVENTION

The present invention is directed to a laminate comprising a curable fluoroelastomer composition layer and a curable polyamide-filled polyacrylate elastomer composition layer. The two layers may be directly in contact or an adhesive and/or tie layer may be between the layer of fluoroelastomer and the layer of polyamide-filled polyacrylate elastomer.

Laminates of the present invention may be employed in hoses, diaphragms, gaskets, seals and packings due to their excellent high temperature resistance and low fuel permeability.

Fluoroelastomers that are suitable for use in this invention are those that are polyhydroxy or diamine curable and those that are curable by an organic peroxide and multifunctional coagent.

By "polyhydroxy curable" is meant fluoroelastomers which are known to crosslink with polyhydroxy curatives such as bisphenol AF. By "diamine curable" is meant fluoroelastomers which are known to crosslink with diamine curatives such as hexamethylene diamine carbamate. Such fluoroelastomers include those having a plurality of carbon-carbon double bonds along the main elastomer polymer chain and also fluoroelastomers which contain sites that may be readily dehydrofluorinated. The latter fluoroelastomers include, but are not limited to those which contain adjacent copolymerized units of vinylidene fluoride (VF₂) and hexafluoropropylene (HFP) as well as fluoroelastomers which contain adjacent copolymerized units of VF₂ (or tetrafluoroethylene) and a fluorinated comonomer having an acidic hydrogen atom such as 2-hydropentafluoropropylene; 1-hydropentafluoropropylene; trifluoroethylene; 2,3,3,3-tetrafluoropropene; or 3,3,3-trifluoropropene. Preferred polyhydroxy curable fluoroelastomers include the copolymers of i) vinylidene fluoride with hexafluoropropylene and, optionally, tetrafluoroethylene (TFE); ii) vinylidene fluoride with a perfluoro(alkyl vinyl ether) such as perfluoro(methyl vinyl ether), 2-hydropentafluoropropylene and optionally, tetrafluoroethylene; iii) tetrafluoroethylene with propylene and 3,3,3-trifluoropropene; iv) tetrafluoroethylene, perfluoro(methyl vinyl ether) and hexafluoro-2-(pentafluorophenoxy)-1-(trifluorovinyloxy) propane, and v) ethylene with tetrafluoroethylene, perfluoro(methyl vinyl ether) and 3,3,3-trifluoropropylene.

In addition to the fluoroelastomer, polyhydroxy curable fluoroelastomer compositions of this invention contain a polyhydroxy cure system, meaning a polyhydroxy curative and a vulcanization (or curing) accelerator.

The curable compositions contain 0.4 to 4 parts by weight (preferably 1 to 2.5 parts) of polyhydroxy curing agent (or a derivative thereof) per 100 parts by weight fluoroelastomer, i.e. 0.4-4 phr (preferably 1-2.5 phr). Typical polyhydroxy cross-linking agents include di-, tri-, and tetrahydroxybenzenes, naphthalenes, and anthracenes, and bisphenols of the formula 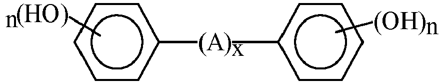 where A is a difunctional aliphatic, cycloaliphatic, or aromatic radical of 1-13 carbon atoms, or a thio, oxy, carbonyl, sulfinyl, or sulfonyl radical; A may optionally be substituted with at least one chlorine or fluorine atom; x is 0 or 1; n is 1 or 2; and any aromatic ring of the polyhydroxylic compound may optionally be substituted with at least one chlorine or fluorine atom, an amino group, a -CHO group, or a carboxyl or acyl radical. Preferred polyhydroxy compounds include hexafluoroisopropylidene-bis(4-hydroxy-benzene) (i.e. bisphenol AF or BPAF); 4,4'-isopropylidene diphenol (i.e. bisphenol A); 4,4'-dihydroxydiphenyl sulfone; and diaminobisphenol AF. Referring to the bisphenol formula shown above, when A is alkylene, it can be for example methylene, ethylene, chloroethylene, fluoroethylene, difluoroethylene, propylidene, isopropylidene, tributylidene, heptachlorobutylidene, heptafluorobutylidene, pentylidene, hexylidene, and 1,1-cyclohexylidene. When A is a cycloalkylene radical, it can be for example 1,4-cyclohexylene, 2-chloro-1,4-cyclohexylene, cyclopentylene, or 2-fluoro-1,4-cyclohexylene. Further, A can be an arylene radical such as m-phenylene, p-phenylene, o-phenylene, methylphenylene, dimethylphenylene, 1,4-naphthylene, 3-fluoro-1,4-naphthylene, and 2,6-naphthylene. Polyhydroxyphenols of the formula 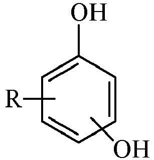 or 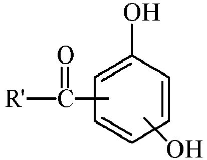 where R is H or an alkyl group having 1-4 carbon atoms or an aryl group containing 6-10 carbon atoms and R' is an alkyl group containing 1-4 carbon atoms also act as effective crosslinking agents. Examples of such compounds include hydroquinone, catechol, resorcinol, 2-methylresorcinol, 5-methyl-resorcinol, 2-methylhydroquinone, 2,5-dimethylhydroquinone, 2-t-butyl-hydroquinone; and such compounds as 1,5-dihydroxynaphthalene and 2,6-dihydroxynaphthalene.

Additional polyhydroxy curing agents include alkali metal salts of bisphenol anions, quaternary ammonium salts of bisphenol anions, tertiary sulfonium salts of bisphenol anions and quaternary phosphonium salts of bisphenol anions. Specific examples include the disodium salt of bisphenol AF, the dipotassium salt of bisphenol AF, the monosodium monopotassium salt of bisphenol AF and the benzyltriphenylphosphonium salt of bisphenol AF.

Quaternary ammonium and phosphonium salts of bisphenol anions are discussed in U.S. Patents 4,957,975 and 5,648,429. Bisphenol AF salts (1:1 molar ratio) with quaternary ammonium ions of the formula R₁R₂R₃R₄N⁺, wherein R₁-R₄ are C₁-C₈ alkyl groups and at least three of R₁-R₄ are C₃ or C₄ alkyl groups are preferred. Specific examples of these preferred compositions include the 1:1 molar ratio salts of tetrapropyl ammonium-, methyltributylammonium- and tetrabutylammonium bisphenol AF. Such salts may be made by a variety of methods. For instance a methanolic solution of bisphenol AF may be mixed with a methanolic solution of a quaternary ammonium salt, the pH is then raised with sodium methoxide, causing an inorganic sodium salt to precipitate. After filtration, the tetraalkylammonium/BPAF salt may be isolated from solution by evaporation of the methanol. Alternatively, a methanolic solution of tetraalkylammonium hydroxide may be employed in place of the solution of quaternary ammonium salt, thus eliminating the precipitation of an inorganic salt and the need for its removal prior to evaporation of the solution.

In addition, derivatized polyhydroxy compounds such as mono- or diesters, and trimethylsilyl ethers are useful crosslinking agents. Examples of such compositions include, but are not limited to resorcinol monobenzoate, the diacetate of bisphenol AF, the diacetate of sulfonyl diphenol, and the diacetate of hydroquinone.

Vulcanization accelerators (also referred to as cure accelerators) which may be used in the curable fluoroelastomer compositions include tertiary sulfonium salts such as [(C₆H₅)₂S⁺(C₆H₁₃)][Cl]⁻, and [(C₆H₁₃)₂S(C₆H₅)]⁺[CH₃CO₂]⁻ and quaternary ammonium, phosphonium, arsonium, and stibonium salts of the formula R₅R₆R₇R₈Y⁺ X- ,where Y is phosphorous, nitrogen, arsenic, or antimony; R₅, R₆, R₇, and R₈ are individually C₁-C₂₀ alkyl, aryl, aralkyl, alkenyl, and the chlorine, fluorine, bromine, cyano, -OR, and -COOR substituted analogs thereof, with R being C₁-C₂₀ alkyl, aryl, aralkyl, alkenyl, and where X is halide, hydroxide, sulfate, sulfite, carbonate, pentachlorothiophenolate, tetrafluoroborate, hexafluorosilicate, hexafluorophosphate, dimethyl phosphate, and C₁-C₂₀ alkyl, aryl, aralkyl, and alkenyl carboxylates and dicarboxylates. Particularly preferred are benzyltri-phenylphosphonium chloride, benzyltriphenylphosphonium bromide, tetrabutylammonium hydrogen sulfate, tetrabutylammonium hydroxide, tetrapropylammonium hydroxide, tetrabutylammonium bromide, tributylallylphosphonium chloride, tributyl-2-methoxypropylphosphonium chloride, 1,8-diazabicyclo[5.4.0]undec-7-ene, and benzyldiphenyl(dimethylamino) phosphonium chloride. Other useful accelerators include methyltrioctylammonium chloride, methyltributylammonium chloride, tetrapropylammonium chloride, benzyltrioctylphosphonium bromide, benzyltrioctylphosphonium chloride, methyltrioctylphosphonium acetate, tetraoctylphosphonium bromide, methyltriphenylarsonium tetrafluoroborate, tetraphenylstibonium bromide, 4-chlorobenzyltriphenyl phosphonium chloride, 8-benzyl-1,8-diazabicyclo(5.4.0)-7-undecenonium chloride, diphenylmethyltriphenylphosphonium chloride, allyltriphenyl-phosphonium chloride, tetrabutylphosphonium bromide, m-trifluoromethyl-benzyltrioctylphosphonium chloride, and other quaternary compounds disclosed in U.S. Patent Nos. 5,591,804; 4,912,171; 4,882,390; 4,259,463; 4,250,278 and 3,876,654. The amount of accelerator used is between 0.05 and 2 parts by weight per hundred parts by weight fluoroelastomer (0.05 - 2 phr). Preferably, 0.1 to 1.0 parts accelerator per hundred parts fluoroelastomer is used.

By "peroxide curable" is meant fluoroelastomers that contain Br or I cure sites along the polymer chain, at chain ends or in both locations.

Cure sites along the fluoroelastomer chain are typically due to copolymerized cure site monomers that contain bromine or iodine atoms. Examples of suitable cure site monomers include, but are not limited to: i) bromine -containing olefins; ii) iodine-containing olefins; iii) bromine-containing vinyl ethers; and iv) iodine-containing vinyl ethers.

Brominated cure site monomers may contain other halogens, preferably fluorine. Examples of brominated olefin cure site monomers are CF₂=CFOCF₂CF₂CF₂OCF₂CF₂Br; bromotrifluoroethylene; 4-bromo-3,3,4,4-tetrafluorobutene-1 (BTFB); and others such as vinyl bromide, 1-bromo-2,2-difluoroethylene; perfluoroallyl bromide; 4-bromo-1,1,2-trifluorobutene-1; 4-bromo-1,1,3,3,4,4,-hexafluorobutene; 4-bromo-3-chloro-1,1,3,4,4-pentafluorobutene; 6-bromo-5,5,6,6-tetrafluorohexene; 4-bromoperfluorobutene-1 and 3,3-difluoroallyl bromide. Brominated vinyl ether cure site monomers useful in the invention include 2-bromo-perfluoroethyl perfluorovinyl ether and fluorinated compounds of the class CF₂Br-R_{f}-O-CF=CF₂ (R_{f} is a perfluoroalkylene group), such as CF₂BrCF₂O-CF=CF₂, and fluorovinyl ethers of the class ROCF=CFBr or ROCBr=CF₂ (where R is a lower alkyl group or fluoroalkyl group) such as CH₃OCF=CFBr or CF₃CH₂OCF=CFBr.

Suitable iodinated cure site monomers include iodinated olefins of the formula: CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, and the like, wherein n=1-3, such as disclosed in U.S. Patent 5,717,036. In addition, suitable iodinated cure site monomers including iodoethylene, 4-iodo-3,3,4,4-tetrafluorobutene-1 (ITFB); 3-chloro-4- iodo-3,4,4-trifluorobutene; 2-iodo -1,1,2,2-tetrafluoro-1-(vinyloxy)ethane; 2- iodo-1-(perfluorovinyloxy)-1,1,-2,2-tetrafluoroethylene; 1,1,2,3,3,3-hexafluoro-2-iodo-1-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

In addition to (or in place of) Br or I containing cure site monomers, iodine-containing endgroups, bromine-containing endgroups or mixtures thereof may optionally be present at one or both of the fluoroelastomer polymer chain ends as a result of the use of chain transfer or molecular weight regulating agents during preparation of the fluoroelastomers. The amount of chain transfer agent, when employed, is calculated to result in an iodine or bromine level in the fluoroelastomer in the range of 0.005-5 wt.%, preferably 0.05-3 wt.%.

Examples of chain transfer agents include iodine-containing compounds that result in incorporation of a bound iodine atom at one or both ends of the polymer molecules. Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,6-diiodoperfluorohexane; 1,3-diiodo-2-chloroperfluoropropane; 1,2-di(iododifluoromethyl)-perfluorocyclobutane; monoiodoperfluoroethane; monoiodoperfluorobutane; 2-iodo-1-hydroperfluoroethane, etc. Also included are the cyano-iodine chain transfer agents disclosed in European Patent 0868447A1. Particularly preferred are diiodinated chain transfer agents.

Examples of brominated chain transfer agents include 1-bromo-2-iodoperfluoroethane; 1-bromo-3-iodoperfluoropropane; 1-iodo-2-bromo-1,1-difluoroethane and others such as disclosed in U.S. Patent 5,151,492.

Organic peroxides suitable for use in the compositions of the invention include, but are not limited to 1,1-bis(t-butylperoxy)-3,5,5-trimethylcyclohexane; 1,1-bis(t-butylperoxy)cyclohexane; 2,2-bis(t-butylperoxy)octane; n-butyl-4, 4-bis(t-butylperoxy)valerate; 2,2-bis(t-butylperoxy)butane; 2,5-dimethylhexane-2,5-dihydroxyperoxide; di-t-butyl peroxide; t-butylcumyl peroxide; dicumyl peroxide; alpha, alpha'-bis(t-butylperoxy-m-isopropyl)benzene; 2,5-dimethyl-2,5-di(t-butylperoxy)hexane; 2,5-dimethyl-2,5-di(t-butylperoxy)hexene-3; benzoyl peroxide, t-butylperoxybenzene; 2,5-dimethyl-2,5-di(benzoylperoxy)-hexane; t-butylperoxymaleic acid; and t-butylperoxyisopropylcarbonate. Preferred examples of organic peroxides include 2,5-dimethyl-2,5-di(t-butylperoxy)hexane, dicumyl peroxide, and alpha, alpha'-bis(t-butylperoxy-m-isopropyl)benzene. The amount compounded is generally in the range of 0.05-5 parts by weight, preferably in the range of 0.1-3 parts by weight per 100 parts by weight of the fluoroelastomer. In addition, the organic peroxides may be used singly or in combinations of two or more types.

Coagents employed in the curable compositions of this invention are polyfunctional unsaturated compounds such as triallyl cyanurate, trimethacryl isocyanurate, triallyl isocyanurate, trimethallyl isocyanurate, triacryl formal, triallyl trimellitate, N,N'-m-phenylene bismaleimide, diallyl phthalate, tetraallylterephthalamide, tri(diallylamine)-s-triazine, triallyl phosphite, bis-olefins and N,N-diallylacrylamide. The amount compounded is generally in the range of 0.1-10 parts by weight per 100 parts by weight of the fluoroelastomer. The preferable range of coagent is 0.2-6 parts by weight per 100 parts by weight fluoroelastomer. The unsaturated compounds may be used singly or as a combination of two or more types.

Curable fluoroelastomer compositions that are suitable for use in the laminates of the invention are made by combining fluoroelastomer, curative, and any other ingredients in an internal mixer or rubber mill. Preferably the fluoroelastomer is a peroxide curable fluoroelastomer.

The polyacrylate copolymer elastomers useful in the practice of the invention described herein comprise copolymerized units of a) at least one alkyl ester and/or alkoxyalkyl ester of propenoic acid and b) a cure site monomer. Examples of such suitable alkyl and alkoxyalkyl esters of propenoic acid include alkyl acrylates and alkoxyalkyl acrylates as well as species wherein the propenoic acid is substituted with a C₁-C₁₀ alkyl group. Examples of such species include alkyl methacrylates, alkyl ethacrylates, alkyl propacrylates, and alkyl hexacrylates, alkoxyalkyl methacrylates, alkoxyalkyl ethacryates, alkoxyalkyl propacrylates and alkoxyalkyl hexacrylates. In addition, the alkyl ester groups of the propenoic acid esters may be substituted with cyano groups or one or more fluorine atoms. That is, the ester group will be a C₁-C₁₂ cyanoalkyl group or a C₁-C₁₂ fluoroalkyl group. The acrylate copolymers may also comprise copolymerized units of more than one species of the alkyl esters and/or alkoxyalkyl esters, for example two alkyl acrylates.

The alkyl and alkoxyalkyl esters of propenoic acid and substituted propenoic acids are preferably C₁-C₁₂ alkyl esters of acrylic or methacrylic acid or C₁-C₂₀ alkoxyalkyl esters of acrylic or methacrylic acid. Examples of such esters include methyl acrylate, methyl methacrylate, ethyl acrylate, ethyl methacrylate, butyl acrylate, butyl methacrylate, 2-ethylhexyl acrylate, 2-methoxyethylacrylate, 2-ethoxyethylacrylate, 2-(n-propoxy)ethylacrylate, 2-(n-butoxy)ethylacylate, 3-methoxypropylacrylate and 3-ethoxypropylacrylate. Examples of esters that contain C₁-C₁₂ cyanoalkyl and fluoroalkyl groups include cyanomethylacrylate, 1-cyanoethylacrylate, 2-cyanopropylacrylate, 3-cyanopropylacrylate, 4-cyanobutylacrylate, 1,1-dihydroperfluoroethyl methacrylate, 1,1-dihydroperfluoroethyl acrylate, 1,1-dihydroperfluoropropyl methacrylate, 1,1-dihydroperfluoropropyl acrylate, and 1,1,5-trihydroperfluorohexyl (meth)acrylate, and 1,1,5-trihydroperfluorohexyl methacrylate. Preferably, the ester group will comprise C₁-C₈ alkyl groups. More preferably, the ester group will comprise C₁-C₄ alkyl groups. Particularly useful alkyl acrylate esters are methyl acrylate, ethyl acrylate and butyl acrylate. Particularly useful alkyl methacrylate esters are methyl methacrylate. Minor amounts of unsaturated acetates such as ethenyl acetate or 3-butenyl acetate may be incorporated into the polymer without deviating from the scope of this invention. By minor amounts is meant less than 1 wt.%, based on the weight of the acrylate copolymer.

Esters that comprise comonomer units in the acrylate copolymers may be generally represented by the formula 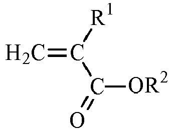 Where R¹ is H or C₁-C₁₀ alkyl, and R² is C₁-C₁₂ alkyl, C₁-C₂₀ alkoxyalkyl, C₁-C₁₂ cyanoalkyl, or C₁-C₁₂ fluoroalkyl.

In certain embodiments, the acrylate copolymers may be derived from copolymerization of more than one acrylate monomer, for example a first alkyl acrylate, a second alkyl acrylate and optionally, a monoalkyl ester of 1,4-butenedioic acid. Examples of such compositions include copolymers of methyl acrylate and butyl acrylate and copolymers of methyl acrylate, butyl acrylate and the monoethyl ester of 1,4-butenedioic acid.

The concentration of propenoic acid ester comonomers that are present in these acrylate copolymers will be at least 50 weight percent, based on the weight of the copolymer. Preferably, the concentration will be at least 55 weight percent, and more preferably at least 60 weight percent. If the concentration of propenoic acid ester is below 50 wt.%, the likelihood that some crystallinity will be present is high, for example in polymers that are ethylene acrylate ester copolymers. Crystallinity in the acrylate copolymer diminishes the elastic properties of the cured composition. In addition, a high content of non-polar monomer, such as ethylene, diminishes compatibility of the acrylate copolymer with polyamide, and therefore physical properties of the cured composition, such as tensile and tear strength, will be affected.

The acrylate copolymers useful in the practice of the invention comprise copolymerized cure site monomer units selected from the group consisting of unsaturated carboxylic acids, anhydrides of unsaturated carboxylic acids, unsaturated epoxides, and mixtures of two or more thereof. These cure site monomer units contain chemical groups (e.g., carboxyl and epoxy groups) that react with amines and/or other nitrogen-containing species, such as carbamates.

Unsaturated carboxylic acids include for example, acrylic acid and methacrylic acid, 1,4-butenedioic acids, citraconic acid, and monoalkyl esters of 1,4-butenedioic acids. The 1,4-butenedioic acids may exist in cis- or trans- form or both, i.e. maleic acid or fumaric acid, prior to polymerization. Useful copolymerizable cure site monomers also include anhydrides of unsaturated carboxylic acids, for example, maleic anhydride, citraconic anhydride, and itaconic anhydride. Preferred cure site monomers include maleic acid and any of its half acid esters (monoesters) or diesters, particularly the methyl or ethyl half acid esters (e.g., monoethyl maleate); fumaric acid and any of its half acid esters or diesters, particularly the methyl, ethyl or butyl half acid esters; and monoalkyl and monoarylalkyl esters of itaconic acid. The presence of these copolymerized cure site monomers produces curable acrylate copolymer compositions that exhibit good scorch safety, meaning that the cure site reacts with amines slowly or not at all at temperatures less than about 120°C, but still permits fast crosslinking at higher temperatures.

Examples of useful unsaturated epoxides include for example, glycidyl (meth)acrylate, allyl glycidyl ether, glycidyl vinyl ether, and alicyclic epoxy-containing (meth)acrylates.

Preferably, the acrylate copolymer gum rubber comprises at least 0.3 mol% of cure site monomer units bearing the amine reactive group, based on the total number of moles of monomer in the copolymer, more preferably at least 0.4 mol%, and most preferably more than 0.5 mol%. While the cure site level in the acrylate copolymer must be sufficient to produce a crosslinked network during the curing and post curing process, high levels of cure site monomer tend to negatively affect heat aging properties of the cured compositions of the invention. Preferably, the acrylate copolymer comprises less than 1.4 mol% cure site, more preferably less than 1.2 mol %, and most preferably less than 1.0 mol%. A preferred range for many embodiments is 0.3 mol% - 1.0 mol% cure site monomer units. When two or more acrylate copolymers are present in the acrylate copolymer component of the polyamide-filled compositions of the invention, the range of about 0.3 to 1.0 mol% amine reactive cure sites applies to the weight average of mole percent cure site in the individual acrylate copolymers. This applies to the other mol% ranges of cure site monomer when more than one acrylate copolymer is present.

In many embodiments, the acrylate copolymers useful in the practice of the invention will also comprise copolymerized units of additional comonomers, for example ethylene and/or other olefins such as propylene, 1-butene, 1-hexene, 1-octene, and the like. The olefin will be present at a concentration of less than 50 wt.%, more preferably less than 45 wt.%, and most preferably about 40 wt.% or less, based on the weight of the acrylate copolymer. Ethylene alkyl acrylate copolymer rubbers having amine-vulcanizable groups are particularly suitable acrylate copolymers for use in the compositions and processes described herein. An example of such a rubber is Vamac® ethylene acrylic elastomer, available from E. I. du Pont de Nemours and Company.

The acrylate copolymers useful in the practice of the invention are curable, i.e. crosslinkable, due to the presence in the polymer chain backbone of copolymerized monomer units that contain epoxy, carboxylic acid, carboxylic acid anhydride and/or carboxylic ester moieties. Such chemical groups can take part in thermally-induced chemical reactions in the presence of aromatic or aliphatic polyamines, preferably diamines.

The polymer blend composition that comprises one component of the curable acrylate copolymer compositions described herein comprises one or more polyamides having a melting peak temperature of at least about 160°C, preferably less than 270°C as determined in accordance with ASTM D3418-08. More preferably, the one or more polyamides have a melting peak temperature of at least 180°C, most preferably at least 200°C. Preferably the polyamide is solid at the curing temperature of the acrylate elastomer, meaning that the curing temperature is less than the melting peak temperature. While not wishing to be bound by theory, when the polyamide is not solid at the curing temperature, curative readily diffuses into the polyamide, rendering the blend difficult to cure. Polyamide resins are well known in the art and embrace those semi-crystalline resins having a weight average molecular weight of at least 5,000 and include those compositions commonly referred to as nylons. Thus, the polyamide component useful in the practice of the invention includes polyamides and polyamide resins such as nylon 6, nylon 7, nylon 6/6, nylon 6/10, nylon 6/12, nylon 11, nylon 12, polyamides comprising aromatic monomers, and polyamide block copolymers such as copoly(amide-ether) or copoly(amide-ester). The resins may be in any physical form, such as pellets and particles of any shape or size, including nanoparticles.

The viscosity of the polyamide resins can vary widely while meeting the aims of the present invention. To ensure that the polyamide becomes dispersed within a continuous phase of acrylate elastomer, it is desirable that the polyamide have an inherent viscosity greater than 0.9 dL/g, more preferably greater than 1.1 dL/g, and most preferably greater than 1.3 dL/g, as measured in accordance with ASTM D2857-95, using 96% by weight sulfuric acid as a solvent at a test temperature of 25°C.

In general, as the concentration of the polyamide in the acrylate copolymer blend increases, the use of a polyamide of higher inherent viscosity becomes more desirable. In certain embodiments, a polyamide with a high content of amine end groups, about 60 meq/Kg or greater, can be desirable and permits the use of a low viscosity polyamide of inherent viscosity about 0.89 dL/g. Such a high amine end group content results in a grafting reaction between the cure site of the acrylate rubber and the polyamide amine end groups which can help to disperse the polyamide in the acrylate rubber. In some instances, however, use of such high amine content polyamide can result in gelling of the acrylate rubber during melt mixing with the polyamide, making subsequent processing more difficult. Gelling of the acrylate elastomer becomes more problematic as the concentration of polyamide in the acrylate copolymer increases.

The polyamide resin can be produced by condensation polymerization of equimolar amounts of a saturated dicarboxylic acid containing from 4 to 12 carbon atoms with a diamine, in which the diamine contains from 4 to 14 carbon atoms. To promote adhesion between the acrylate rubber and the nylon, preferably the polyamide will contain some amine end groups. Polyamide types polymerized from diacids and diamines may contain some molecules having two amine groups. In such cases, certain combinations of polyamide and acrylate rubber can crosslink or gel slightly so as to produce compositions with compromised extrusion processability. Polyamide types prepared by ring opening polymerization reactions such as nylon 6, or those based solely on aminocarboxylic acids such as nylon 7 or 11 are most preferred because they avoid the possibility of crosslinking during blending with the acrylate rubber. Such polyamide types contain molecules with at most one amine group each.

Examples of polyamides include polyhexamethylene adipamide (66 nylon), polyhexamethylene azelaamide (69 nylon), polyhexamethylene sebacamide (610 nylon) and polyhexamethylene dodecanoamide (612 nylon), the polyamide produced by ring opening of lactams, i.e. polycaprolactam, polylauriclactam, poly-11-aminoundecanoic acid, and bis(p-aminocyclohexyl)methanedodecanoamide. It is also possible to use polyamides prepared by the copolymerization of two of the above polymers or terpolymerization of the above polymers or their components, e.g. an adipic acid isophthalic acid hexamethylene diamine copolymer.

Typically, polyamides are condensation products of one or more dicarboxylic acids and one or more diamines, and/or one or more aminocarboxylic acids, and/or ring-opening polymerization products of one or more cyclic lactams. Polyamides may be fully aliphatic or semi-aromatic.

Fully aliphatic polyamides useful in practice of the present invention are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams are caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used.

Carboxylic acid monomers comprised in the fully aliphatic polyamides include, but are not limited to aliphatic carboxylic acids, such as for example adipic acid, pimelic acid, suberic acid, azelaic acid, decanedioic acid, dodecanedioic acid, tridecanedioic acid, tetradecanedioic acid, and pentadecanedioic acid. Diamines can be chosen from diamines having four or more carbon atoms, including, but not limited to tetramethylene diamine, hexamethylene diamine, octamethylene diamine, decamethylene diamine, dodecamethylene diamine, 2-methylpentamethylene diamine, 2-ethyltetramethylene diamine, 2-methyloctamethylenediamine; trimethylhexamethylenediamine, meta-xylylene diamine, and/or mixtures thereof.

Semi-aromatic polyamides are also suitable for use in the present invention. Such polyamides are homopolymers, dipolymers, terpolymers or higher order polymers formed from monomers containing aromatic groups. One or more aromatic carboxylic acids may be terephthalic acid or a mixture of terephthalic acid with one or more other carboxylic acids, such as isophthalic acid, phthalic acid, 2-methyl terephthalic acid and naphthalic acid. In addition, the one or more aromatic carboxylic acids may be mixed with one or more aliphatic dicarboxylic acids. Alternatively, an aromatic diamine such as meta-xylylene diamine can be used to provide a semi-aromatic polyamide, an example of which is a homopolymer comprising meta-xylylene diamine and adipic acid.

Block copoly(amide) copolymers are also suitable for use as the polyamide component provided the melting peak temperature of the polyamide block is at least 160°C. If a low softening point material comprises the block copoly(amide) copolymer, e.g., a polyether oligomer or a polyalkylene ether, for example, poly(ethylene oxide), then the block polymer will be a copoly(amide-ether). If a low softening point material of the block copoly(amide) copolymer comprises an ester, for example, a polylactone such as polycaprolactone, then the block copolymer will be a copoly(amide-ester). Any such low softening point materials may be used to form a block copoly(amide) copolymer. Optionally, the lower softening point material of the block copoly(amide) copolymer may comprise a mixture, for example, a mixture of any of the above-mentioned lower softening point materials. Furthermore, said mixtures of lower softening point materials may be present in a random or block arrangement, or as mixtures thereof. Preferably, the block copoly(amide) copolymer is a block copoly(amide-ester), a block copoly(amide-ether), or mixtures thereof. More preferably, the block copoly(amide) copolymer is at least one block copoly(amide-ether) or mixtures thereof. Suitable commercially available thermoplastic copoly(amide-ethers) include PEBAX® polyether block amides from Elf-Atochem, which includes PEBAX® 4033 and 6333. Most preferably, the polyamide is other than a block copoly(amide-ether) or copoly(amide-ester). Other polyamides have generally higher melting peak temperatures and are more effective in reinforcing the acrylate elastomer. Poly(amide-ethers) also exhibit poorer hot air aging as compared to conventional polyamides lacking a polyether block.

Preferred polyamides are homopolymers or copolymers wherein the term copolymer refers to polyamides that have two or more amide and/or diamide molecular repeat units.

The polyamide component may comprise one or more polyamides selected from Group I polyamides having a melting peak temperature of at least about 160°C, but less than about 210°C, and comprising an aliphatic or semiaromatic polyamide, for example poly(pentamethylene decanediamide), poly(pentamethylene dodecanediamide), poly(ε-caprolactam/hexamethylene hexanediamide), poly(ε-caprolactam/hexamethylene decanediamide), poly(12-aminododecanamide), poly(12-aminododecanamide/tetramethylene terephthalamide), and poly(dodecamethylene dodecanediamide); Group (II) polyamides having a melting peak temperature of at least about 210°C, and comprising an aliphatic polyamide selected from the group consisting of poly(tetramethylene hexanediamide), poly(ε-caprolactam), poly(hexamethylene hexanediamide), poly(hexamethylene dodecanediamide), and poly(hexamethylene tetradecanediamide); Group (III) polyamides having a melting peak temperature of at least about 210°C, and comprising about 20 to about 35 mole percent semiaromatic repeat units derived from monomers selected from one or more of the group consisting of (i) aromatic dicarboxylic acids having 8 to 20 carbon atoms and aliphatic diamines having 4 to 20 carbon atoms; and about 65 to about 80 mole percent aliphatic repeat units derived from monomers selected from one or more of the group consisting of an aliphatic dicarboxylic acid having 6 to 20 carbon atoms and said aliphatic diamine having 4 to 20 carbon atoms; and a lactam and/or aminocarboxylic acid having 4 to 20 carbon atoms; Group (IV) polyamides comprising about 50 to about 95 mole percent semi-aromatic repeat units derived from monomers selected from one or more of the group consisting of aromatic dicarboxylic acids having 8 to 20 carbon atoms and aliphatic diamines having 4 to 20 carbon atoms; and about 5 to about 50 mole percent aliphatic repeat units derived from monomers selected from one or more of the group consisting of an aliphatic dicarboxylic acid having 6 to 20 carbon atoms and said aliphatic diamine having 4 to 20 carbon atoms; and a lactam and/or aminocarboxylic acid having 4 to 20 carbon atoms; Group (V) polyamides having a melting peak temperature of at least about 260°C, comprising greater than 95 mole percent semi-aromatic repeat units derived from monomers selected from one or more of the group consisting of aromatic dicarboxylic acids having 8 to 20 carbon atoms and aliphatic diamines having 4 to 20 carbon atoms; and less than 5 mole percent aliphatic repeat units derived from monomers selected from one or more of the group consisting of an aliphatic dicarboxylic acid having 6 to 20 carbon atoms and said aliphatic diamine having 4 to 20 carbon atoms; and a lactam and/or aminocarboxylic acid having 4 to 20 carbon atoms. The polyamide may also be a blend of two or more polyamides.

Preferred polyamides include nylon 6, 6/6, and Group IV polyamides having a melting peak temperature less than about 270°C and an amine end group concentration of 60 meq or less. These polyamides have a melting peak temperature sufficiently high so as not to limit the scope of applications for the curable polyamide-filled acrylate copolymers, but not so high that production of the blends causes significant degradation of the acrylate copolymer. Also preferred are polyamides formed by ring opening or condensation of aminocarboxylic acids.

Polyamides suitable for use in the invention are widely commercially available, for example Zytel^{®} resins, available from E. I. du Pont de Nemours and Company, Wilmington, Delaware, USA, Durethan® resins, available from Lanxess, Germany, and Ultramid® resins available from BASF, USA.

Preferably, the polyamide component of the filled acrylate copolymer compositions is present in the acrylate copolymer in the form of approximately spherical particles. The size of the particles is relatively unimportant, though tensile strength of the cured composition becomes optimal when most of the particles are about 1 micrometer in diameter or smaller. Such compositions can be mixed, molded and/or extruded using conventional techniques to produce curable compositions that may be crosslinked with conventional curative systems to form a wide variety of elastomer articles.

The polymer blend composition that is a component of the curable polyamide-filled acrylate copolymer compositions of the invention comprises 40-90 weight percent of the amorphous acrylate copolymer component described herein and 10 - 60 weight percent of the polyamide component described herein, based on the total weight of the acrylate copolymer and polyamide components. The amorphous acrylate copolymer component may be made up of one or more than one acrylate copolymer of the type described herein as being suitable for use in the practice of the invention. Similarly, the polyamide component may be made up of one or more than one polyamide of the type described herein as being suitable for use in the practice of the invention. Preferably, the curable compositions will comprise 50 to 80 weight percent acrylate copolymer component and 20 to 50 weight percent polyamide component, based on the total weight of the acrylate copolymer and polyamide components. More preferably, the curable compositions will comprise 55 to 70 weight percent acrylate copolymer component and 30 to 45 weight percent polyamide component based on the total weight of the acrylate copolymer and polyamide components. These ratios provide a polyamide-filled acrylate copolymer composition such that a cured article made therefrom exhibits sufficient Shore A hardness so that little or no reinforcing filler is needed to further increase the hardness of the cured composition. In addition, the polymer blends exhibit green strengths of less than about 2MPa, as determined in accordance with ASTM D6746-10 and have good cure responses when compounded with a curative to form a curable composition, preferably at least 2.5 dN-m and more preferably at least 4 dN-m, as determined in accordance with ISO 6502:1999a using an MDR 2000 from Alpha Technologies operating at 0.5° arc and at test conditions of 180°C for 15 minutes, where ML refers to the minimum torque value measured and MH refers to the maximum torque value attained after the measurement of ML.

The polymer blend component of the curable polyamide-filled acrylate copolymer compositions may be formed by mixing the polyamide component into the acrylate copolymer component at temperatures above the melting peak temperature of the polyamide, under conditions that do not produce a dynamic cure of the acrylate copolymer, followed by cooling the thus-produced polymer blend to form a polyamide-filled acrylate copolymer composition. That is, an amine curative will not be present when the polyamide component and acrylate copolymer component are being mixed. This is because the mixing temperature specified is above that at which crosslinking and/or gelling of the acrylate copolymer will occur.

Cooling of the composition formed by mixing the acrylate copolymer component and polyamide component serves to crystallize the polyamide domains so that the polyamide becomes solid and therefore cannot coalesce to form a continuous phase upon subsequent mixing, e.g., when mixed with an amine curative to form a curable composition. The temperature below which the blend must be cooled can be determined by measuring the crystallization peak temperature according to ASTM D3418-08. The polyamide-filled acrylate copolymer compositions may exhibit multiple crystallization peak temperatures. In such cases, the lowest crystallization peak temperature is taken as the temperature below which the blend must be cooled to fully solidify the polyamide component. Generally, the blend will be cooled to 40°C or less, which is sufficient to solidify the polyamides useful in the practice of the present invention.

The curable acrylate copolymer compositions described herein also comprise an amine curative. Preferably the amine curative is a diamine curative or certain other nitrogen-containing curatives, such as diamine carbamates that generate diamines. The curative will typically be present in an amount of from 0.1 to 10 parts per hundred parts of acrylate copolymer, preferably 0.3-2 parts, more preferably 0.4-1 part.

Examples of suitable aromatic amines include 4,4'-bis(4-aminophenoxy)biphenyl, 4,4'-diaminodiphenyl sulfide, 1,3-bis(4-aminophenoxy)-2,2-dimethylpropane, 4,4'-diaminophenyl sulfone, 2,2-bis[4-(4-aminophenoxy)phenyl]hexafluoropropane, 4,4'-oxydianiline, 4,4'-methylenedianiline, 4,4'-diaminobenzanilide, 1,3-bis(4-aminophenoxy) benzene, 2,2-bis[4-(4-aminophenoxy)phenyl]propane, and phenylene diamine. Examples of suitable aliphatic amine and other curatives include hexamethylenediamine, hexamethylenediamine carbamate, N,N'-cinnamylidene-1,6-hexanediamine, ethylenediamine, diethylene triamine, cyclohexane diamine, propylenediamine and butylenediamine.

In the curable acrylate copolymer composition, the preferable molar ratio of primary amine groups in the polyamine curative to carboxylic acid or carboxylic anhydride or epoxy cure site monomer residues in the polymer is in the range of 0.2 to 2.0, more preferably in the range of 0.5 to 1.5, and most preferably in the range of 0.75 to 1.0.

The addition of curative to the polyamide-reinforced acrylate copolymer composition will desirably take place at a temperature below the decomposition temperature of the curative and below the temperature at which the crosslinking reaction occurs with the carboxyl, anhydride or epoxy groups of the acrylate copolymer. Generally, the addition will take place at a temperature below 140°C, preferably at a temperature no greater than 120°C. The addition of the curative may take place simultaneously with the addition of optional processing ingredients, such as colorants, conventional carbon black or mineral reinforcing agents, antioxidants, processing aids, fillers and plasticizers, or it may be an operation separate from addition of other ingredients. The addition may be conducted on a two-roll rubber mill or by using internal mixers suitable for compounding gum rubber compositions, including Banbury® internal mixers, Haake Rheocord® mixers, Brabender Plastograph® mixers, Farrel Continuous Mixers, or single and twin screw extruders.

Accelerators are examples of additives that are useful in certain embodiments. That is, the rate of the amine cure may be increased by the presence of basic vulcanization accelerators as generally known in the art. The accelerator may be a guanidine, an arylguanidine, an alkylguanidine, an amidine, mixtures and salts thereof, or other materials as disclosed in U.S. Patent 3,883,472. Representative accelerators include tetramethylguanidine, tetraethylguanidine, diphenylguanidine, di-orthotolyl guanidine and 1,8-diazabicyclo[5.4.0]undec-7-ene (DBU). The concentration of guanidine or amidine type accelerators is generally in the range of 0.5 to 5 phr of acrylate copolymer, preferably 1 to 3 phr. Preferred accelerators are DBU and DBU salts of organic acids due to their low toxicity and good cure acceleration.

For example, a typical curing process might utilize 1.0 phr of hexamethylenediamine carbamate and 1 phr of DBU salt based on 100 parts of acrylate copolymer elastomer, along with other ingredients. After blending on a roll mill, a curing step of 10 minutes at 175°C at a pressure of at least 10 MPa may be executed.

To achieve optimal heat aging resistance, an antioxidant is desirably added to the curable acrylate copolymer composition prior to curing. Useful antioxidants include, but are not limited to, aryl amines, phenolics, imidazoles, and phosphites. Thus, in some embodiments, the antioxidant will be a phosphorus ester antioxidant, a hindered phenolic antioxidant, an amine antioxidant, or a mixture of two or more of these compounds. The proportion of the antioxidant compound in the composition is typically 0.1 to 5 phr, preferably about 0.5 to 2.5 phr. The weight ratio of the phenolic or amine antioxidant to the phosphorus compound in the mixtures is about 0.5 to 3, and preferably the ratio is about 1.

Examples of aryl amines that may be useful antioxidants include 4,4'-bis(α,α-dimethylbenzyl)diphenylamine, diphenylamine and alkylated diphenylamines, 4-aminodiphenyl amine (which also acts as a scorch retarder), and N-phenyl-N'-(p-toluenesulfonyl)-p-phenylenediamine. Examples of phenolic antioxidants include 4,4'-butylenebis(6-t-butyl-m-cresol), 1,3,5-trimethyl-2,4,6-tris-(3,5-di-t-butyl-4-hydroxybenzyl)benzene, and 4,4'-thiobis-(3-methyl-6-t-butylphenol). Examples of phosphite antioxidants include triphenylphosphite, bis(2,4-di-t-butylphenyl) pentraerythritol diphosphite, and tris(2,4-ditert-butylphenyl)phosphite. Examples of imidazole antioxidants include 2-mercaptomethylbenzimidazole, and 2-mercaptobenzimidazole. Combinations of antioxidants may be used, generally at levels between 0.5 and 5 phr based on 100 parts of the acrylate copolymer rubber in the compound.

Suitable hindered phenolic antioxidants can be, for example 4,4'-butylidenebis(6-t-butyl-m-cresol), 1,3,5-trimethyl-2,4,6-tris-(3,5-di-t butyl-4-hydroxybenzyl)benzene, 2,6-di-t-butyl-α-dimethylamino-p-cresol and 4,4'-thiobis-(3-methyl-6-t-butylphenol).

Preferred antioxidant compositions contain tri(mixed mono- and dinonylphenyl) phosphate mixed with either 4,4'-butylidenebis(6-t-butyl-m cresol) or 4,4'-bis(α,α-dimethylbenzyl)diphenylamine. Preferred antioxidant compositions contain 4,4'-bis(α,α-dimethylbenzyl)diphenylamine (available commercially as Naugard® 445 from Chemtura Corp.). Particularly preferred antioxidant compositions include 4-aminodiphenylamine, at levels up to about 2 phr (parts per hundred parts rubber) based on the acrylate copolymer (i.e. the acrylate rubber) component. Antioxidants may be added while the acrylate rubber is melt mixed with the polyamide, or after the blend has cooled.

The compositions of the invention may also comprise additional polymers provided that when addition of such polymers occurs at a temperature above the melting peak temperature of the polyamide the presence of such polymers does not increase the green strength of the resulting polyamide-filled acrylate composition to above about 2 MPa. For example, the polyamide-filled acrylate copolymer compositions of the invention may be blended with an acrylate copolymer to dilute the polyamide content of the inventive composition by any mixing process, either above or below the melting peak temperature of the polyamide. The acrylate copolymer used for the blending process may be the same as or different from that of the inventive composition, and may further comprise fillers, curatives, or other ingredients. Preferably, such dilution occurs at a temperature below that of the melting peak temperature of the polyamide, and if a curative is present, below the temperature needed to initiate curing.

In addition, the curable acrylate copolymer compositions may optionally comprise additional components including plasticizers, process aids, waxes, pigments, and colorants. Such optional components will generally be present in amounts of from about 0.1 phr to about 30 phr, based on the weight of the acrylate rubber. The addition of such optional components may take place during preparation of the polyamide/acrylate copolymer blend or at the time of mixing of curative and copolymer blend.

In general, compositions that result from mixing acrylate copolymer rubbers and polyamides may comprise a wide range of blend morphologies, ranging from those wherein discrete, discontinuous polyamide particles exist within a continuous amorphous acrylate copolymer matrix, to compositions wherein high aspect ratio polyamide "threads" are present, to compositions that comprise co-continuous structures, to compositions comprising discrete acrylate copolymer domains within a continuous phase of polyamide. Most of these compositions have morphologies that are unsuitable for use in the present invention, because the blends have very high Mooney viscosities, i.e. Mooney viscosity (ML 1+4, 100°C) of greater than about 120, and/or poor elastic properties such as a low tensile elongation to break, and high compression set. However, if the ratio of components is chosen as described herein, polyamide-filled acrylate copolymer compositions can be produced that have Mooney viscosities below about 120 (ML 1+4, 100°C) and good elastic properties. Such polyamide-filled acrylate copolymer compositions of the invention and those suitable for use in the processes of the invention are characterized by having green strengths of less than 2 MPa, as determined by measurement in accordance with ASTM D6746-10. The resultant compositions have good processability and elastic properties. A green strength value less than 2 MPa is a basic characteristic of the compositions of the invention and is confirmatory of the presence of a continuous acrylate copolymer phase and a discontinuous polyamide phase in the polyamide-filled acrylate copolymer compositions. By "discontinuous polyamide phase" is meant that the polyamide is present in the polymer blend compositions of the invention as dispersed particles, or domains surrounded by a continuous amorphous acrylate copolymer matrix. In general, the polyamide domains will be completely isolated from each other within the continuous amorphous acrylate copolymer matrix. However, in certain instances a small percentage, less than about 5%, of localized sites in the polymer blend composition may exist wherein the polyamide domains are aggregated or connected to each other. Such polymer blend compositions that have green strengths of less than 2 MPa are considered to comprise a discontinuous polyamide phase for purposes of the invention. Preferably, the green strength of the polyamide-filled acrylate copolymers will be below 1 MPa.

A green strength greater than 2 MPa indicates the blend has high Mooney viscosity, poor extrusion processability, or poor elastic properties after curing. These deficiencies may arise because the polyamide phase of the blend is continuous or co-continuous with the acrylate copolymer, or because the end groups of the polyamide have reacted with the cure site of the acrylate copolymer to an extent that the acrylate polymer has gelled, or any combination of the two.

Laminates of the invention are made by forming an article comprising a layer of the polyamide-filled curable polyacrylate elastomer composition and a layer of the curable fluoroelastomer composition. The laminate may be in the form of a tube, hose, sheet, or molded article. The laminate article may be produced by methods generally practiced for producing multi-layer articles. For example the layers may be coextruded, or they may be formed into film or sheet using separate operations, then combined to form a laminate in a later step. The process of combining the layers to form a laminate may occur simultaneously with the application of heat and pressure to crosslink the article, i.e., in a mold or autoclave, or the layers may be combined prior to crosslinking the article. Alternatively, the layers may be formed by sequential extrusion processes, i.e., forming a first layer, then applying a second layer using a cross-head die or other extrusion coating process.

Laminates of the invention are cured to produce a finished article by the application of heat and pressure. Temperatures typically range from 150°C to 200°C, for a period of time of about two minutes to one hour. The laminates are preferably cured at a pressure of at least 0.5MPa in closed mold or an autoclave. The application of pressure improves the degree of adhesion between the layers of the laminate, and also prevents sponging of the article. After curing, the article may be post cured at temperatures of about 150°C to 250°C for up to about 24 hours to complete the curing process and fully develop the properties of the article.

### EXAMPLES

### TEST METHODS

Cure response: Measured per ISO 6502:1999a using an MDR 2000 from Alpha Technologies operating at 0.5° arc. Test conditions of 180°C for 15 minutes. ML refers to the minimum torque value measured during the test, while MH refers to the maximum torque value attained after ML. T50 and T90 refer to the time to 50% and 90% torque, respectively, of the difference between MH and ML.

Green strength: Measured in accordance with ASTM D6746-10 on the uncured blend of acrylate copolymer and polyamide, prior to the addition of any other ingredients. The blend is sheeted on a roll mill to about 2.5 mm thickness, then molded in a cavity having dimensions of 2mm x 76.2mm x.152.4mm. Molding conditions are 100°C for 5 minutes under 30 tons of pressure. Following removal from the press, the molded plaque is cooled for 30 minutes at room temperature between metal sheets. ASTM D412 Die C tensile specimens are then cut from the molded plaque in a direction parallel to the grain of the milled sheet. Median yield stress is reported. Test temperature is 23°C ± 2°C.

Peel strength: Measured per ISO 36:2005, but without fabric in the molding of the test pieces. The fluoroelastomer and polyacrylate compounds were pressed together and cured in a closed mold at 165°C for 20 minutes. A release film was placed between a portion of the two layers to provide material for gripping the test piece. Method A of ISO 6133:1998 was used to compute the median peel strength. Data reported are the median of three test specimens.

### Materials

- A-1: Copolymer of methylacrylate and ethylene comprising 55 wt% copolymerized methylacrylate units, 43 wt% ethylene units (about 70 mol %) and approximately 2 wt% (about 0.6 mol %) copolymerized units of monoethyl maleate, Mooney viscosity (ML 1+4, 100°C) of 33.
- PA-1: Polyamide 6, inherent viscosity of 1.450 dL/g , melting peak temperature approximately 220°C, available from BASF as Ultramid® B40.
- FKM-1: Fluoroelastomer comprising vinylidene fluoride (VF₂), hexafluoropropylene (HFP), tetrafluoroethylene (TFE), and 0.4 wt% of a bromine-containing cure site monomer, with a Mooney Viscosity (ML 1+10, 121°C) of 28.
- FKM-2: Fluoroelastomer comprising VF₂, HFP, TFE, and 0.6 wt% of a bromine containing cure site monomer. The polymer also contains 0.2 wt% iodine resulting from an iodine containing chain transfer agent. Mooney viscosity (ML1+10, 121°C) of 26.
- FKM-3: Fluoroelastomer comprising VF₂, HFP, TFE, and iodine cure sites. Mooney Viscosity (ML1+10, 121 °C) of 65. Available from DuPont as Viton® GBL600S.

### Other materials

Accelerator Vulcofac® ACT-55, tertiary amine complex absorbed in an amount of 70 wt.% on a silica carrier, available from Safic-Alcan.
- AO-1: Antioxidant available from Chemtura Corp. as Naugard® 445
- AO-2: Antioxidant available from Sigma-Aldrich Corp. as n-phenyl-p-phenylenediamine.
- Ca(OH)₂: Calcium hydroxide, available from Rhein Chemie Corp. as Rhenofit® CF

Carbon black N550: Sterling® SO carbon black, available from Cabot Corp.

Carbon black N990: Available from Cancarb Corp. as Thermax® N990.
- Coagent-1: Triallylisocyanurate, available from DuPont as Diak® 7
- Coagent-2: Trifunctional methacrylate ester, available from Sartomer Corp. as Saret® 517.
- Curative 1: Salt of benzyltriphenylphosphonium chloride reacted with bisphenol AF, available from DuPont as Viton® Curative 50.
- Curative 2: Carbamate of hexamethylene diamine, available from DuPont as Diak™ 1.
- MgO: Magnesium oxide available from Akrochem Corp as Elastomag® 170
- Peroxide: 2,5-dimethyl-2,5-di(t-butylperoxy) hexane, supplied as a 45% by weight active blend with calcium carbonate and silica. Available from Sigma-Aldrich Corp.
- Plasticizer: Ester type plasticizer available from Safic Alcan as Alcanplast PO 80.
- Process aid: Available from R.T. Vanderbilt as Vanfre® Vam
- Release aid: Octadecanoic acid, available from Sigma-Aldrich Corp.
- Scorch retarder: Available from Akzo-Nobel N.V. as Armeen® 18D.
- TBABr: Tetrabutylammonium bromide, available from Sigma-Aldrich Corp.
- Wax: Carnauba wax, available from Akrochem Corp.
- Wollastonite: Available from Quarzwerk GMBH as Tremin 283 MST.

### Example 1

Blend B-1, comprising 45 wt% polyamide PA-1 and 55 wt% polyacrylate copolymer A-1, was produced as follows. Polyamide was metered by weight loss feeder into the first barrel section of a 43mm Berstorff® co-rotating twin screw extruder with twelve barrel sections, operating at a screw speed of 250 rpm. At the same time, acrylate copolymer was metered into the fourth section of the extruder via a specially configured extruder and a melt pump for accurate feed rates. Melt temperature of the polyamide/acrylate copolymer blend reached about 280°C. After exiting the twelfth barrel section, the resultant polyamide-filled acrylate copolymer was pelletized and cooled to 25°C before further processing. B-1 was found to have a green strength of 0.5MPa.

Table 1 shows the recipes and cure responses for polyacrylate copolymer curable compounds CA-1 and CA-2. CA-1 is a conventional polyacrylate compound, and relies solely on carbon black for reinforcement. CA-2 comprises both polyamide and carbon black reinforcing fillers. Both CA-1 and CA-2 are cured by a poly-functional amine. CA-1 was produced by charging the ingredients to an internal mixer, and mixing for about 5 minutes until the batch temperature reached 100°C. The batch was then discharged onto a two-roll mill, and sheeted to a thickness suitable for molding peel test specimens. CA-2 was produced by charging all ingredients except curative 2 to the internal mixer, mixed for about 5 minutes until the batch temperature reached 100°C . The batch was then removed, cooled and returned to the mixer with curative 2, and mixed until the batch temperature reached 80°C. CA-2 was then sheeted on a two-roll mill in the same manner as CA-1.

**Table 1**

| | CA-1 | CA-2 |
|---|---|---|
| | phr | phr |
| A-1 | 100 | |
| B-1 | | 181.82 |
| Curative 2 | 1 | 1 |
| Accelerator | 2 | 1 |
| Scorch retarder | | 0.55 |
| Plasticizer | 2 | 7.3 |
| AO-1 | 2 | |
| AO-2 | | 1 |
| Release aid | 1 | |
| Process aid | 1 | 1 |
| Carbon black N550 | 45 | |
| Carbon black N990 | | 36.4 |

| **Cure response** | | |
|---|---|---|
| ML (dN-m) | 0.8 | 0.7 |
| MH (dN-m) | 12.5 | 13.1 |
| MH-ML (dN-m) | 11.6 | 12.4 |
| t50 (min) | 2.4 | 2.4 |
| t90 (min) | 7.4 | 7.4 |

Table 2 shows the recipes and cure responses of fluoroelastomer curable compounds CF-1 and CF-2. CF-1 comprises a polyol curable fluoroelastomer compound, while CF-2 comprises a peroxide curable fluoroelastomer compound. Both CF-1 and CF-2 were produced in the manner of CA-1, described above.

**Table 2**

| | CF-1 | CF-2 |
|---|---|---|
| | phr | phr |
| FKM-1 | 97.3 | |
| FKM-2 | | 46.3 |
| FKM-3 | | 46.3 |
| Carbon black N990 | | 25 |
| Wollastonite | | 4.62 |
| Curative 1 | 2.5 | |
| TBABr | 0.2 | |
| MgO | 3 | |
| Ca(OH)2 | 6 | |
| Coagent-1 | | 3 |
| Coagent-2 | | 2.78 |
| Peroxide | | 2 |
| Wax | | 0.8 |

| **Cure response** | | |
|---|---|---|
| ML (dN-m) | 0.9 | 0.7 |
| MH (dN-m) | 16.5 | 25.8 |
| MH-ML (dN-m) | 15.6 | 25.1 |
| t50 (min) | 1.7 | 1.2 |
| t90 (min) | 2.7 | 2.6 |

Table 3 shows the peel test results for the conventional polyacrylate compound CA-1 and polyamide filled polyacrylate compound CA-2 against polyol cured fluoroelastomer compound CF-1, and also polyamide filled polyacrylate compound CA-2 against peroxide cured fluoroelastomer compound CF-2. CA-2 exhibits useful levels of adhesion to both types of fluoroelastomer compounds. "R" in Table 3 refers to failure in the rubber component.

**Table 3**

| **Peel strength (unaged)** | **CE-1** | **E-1** | **E-2** |
|---|---|---|---|
| CA-1 | x | | |
| CA-2 | | x | x |
| CF-1 | x | x | |
| CF-2 | | | x |
| Peel strength (N/mm) | 2.5 | 2 | 1.6 |
| Failure mode | R | R | R |

| **Peel strength (aged one week at 200° C**) | | | |
|---|---|---|---|
| CA-1 | x | | |
| CA-2 | | x | x |
| CF-1 | x | x | |
| CF-2 | | | x |
| Peel strength (N/mm) | 1.4 | 1.1 | 0.5 |
| Failure mode | R | R | R |

| | | | |
|---|---|---|---|
| x - compound used in peel specimen | | | |

## Claims

1. A curable laminate of polyamide-filled polyacrylate copolymer elastomer and fluoroelastomer comprising
A. a curable fluoroelastomer composition layer; and
B. a curable polyacrylate copolymer elastomer composition layer comprising
a. a polymer blend comprising
i. at least one polyacrylate copolymer elastomer comprising 1) at least 50 wt%, based on the total weight of the polyacrylate copolymer elastomer, of polymerized units of at least one monomer having the structure 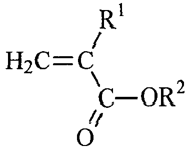 where R¹ is H or C₁-C₁₀ alkyl and R² is C₁-C₁₂ alkyl, C₁-C₂₀ alkoxyalkyl, C₁-C₁₂ cyanoalkyl, or C₁-C₁₂ fluoroalkyl; and 2) copolymerized units of a cure site monomer selected from the group consisting of unsaturated carboxylic acids, anhydrides of unsaturated carboxylic acids, unsaturated epoxides, and mixtures of two or more thereof; and
ii. 10-60 wt.% of one or more polyamides having a melting peak temperature of at least 160°C;
wherein A) the polymer blend has a green strength of less than 2 MPa as determined according to ASTM D6746-10, B) the one or more polyamides are present as a discontinuous phase in the polymer blend, and C) the weight percentages of the one or more amorphous acrylate copolymers and one or more polyamides are based on the combined weight of the one or more amorphous acrylate copolymers and one or more polyamides in the polymer blend; and
b) an amine curative.

2. The curable laminate of claim 1 wherein the one or more polyamides have a melting peak temperature of at least 200°C.

3. The curable laminate of claim 1 or 2 wherein the curable polyacrylate copolymer composition exhibits an increase in torque, MH-ML, of at least 2.5 dN-m when tested per ISO 6502:1999a using an MDR 2000 from Alpha Technologies operating at 0.5° arc and 180°C for 15 minutes.

4. The curable laminate of claim 1, 2 or 3 wherein the curable polyacrylate copolymer composition comprises 20 to 50 wt% polyamide based on the total weight of polyacrylate copolymer and polyamide in the polymer blend.

5. The curable laminate of claim 1, 2, 3 or 4 wherein the curable polyacrylate composition comprises polyamide having an inherent viscosity of at least 0.9 dUg measured in accordance with ASTM D2857-95, using 96% by weight sulfuric acid as a solvent at a test temperature of 25°C.

6. The curable laminate of claim 1, 2, 3, 4 or 5 wherein the curable polyacrylate composition comprises a polyacrylate copolymer comprising at least 0.5 mol% of amine reactive cure site monomer.

7. The curable laminate of any one of claims 1 to 6 wherein the curable fluoroelastomer compound comprises a peroxide curable fluroelastomer.

8. The curable laminate of any one of claims 1 to 7 wherein the one or more polyamides comprises polyamide 6/6.

9. The curable laminate of any one of claims 1 to 8 wherein the polymer blend has a green strength of less than 1 MPa as determined according to ASTM D 6746-10.

10. A process for production of a curable laminate having a layer of polyamide-filled acrylate copolymer elastomer composition and a layer of curable fluoroelastomer composition, the process comprising the steps of
A. providing one or more acrylate copolymer elastomers comprising
a) at least 50 wt.%, based on the total weight of the amorphous acrylate copolymer, of polymerized units of at least one monomer having the structure 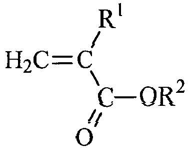 where R¹ is H or C₁-C₁₀ alkyl and R² is C₁-C₁₂ alkyl, C₁-C₂₀ alkoxyalkyl, C₁-C₁₂ cyanoalkyl, or C₁-C₁₂ fluoroalkyl; and
b) copolymerized units of a cure site monomer selected from the group consisting of unsaturated carboxylic acids, anhydrides of unsaturated carboxylic acids, unsaturated epoxides, and mixtures of two or more thereof;
B. providing one or more polyamides having a melting peak temperature of at least 160°C;
C. mixing the polyacrylate copolymer elastomer and polyamide at a temperature greater than the melting peak temperatures of the one or more polyamides, thereby forming a polymer blend comprising 10 wt% to 60 wt% polyamide based on the total weight of the one or polyamides and one or more polyacrylates;
D. cooling the polymer blend to a temperature below the crystallization peak temperatures of the one or more polyamides, thereby forming a polyamide-filled polyacrylate copolymer elastomer composition that i) comprises a continuous amorphous acrylate copolymer elastomer phase and a discontinuous polyamide phase and ii) has a green strength of less than 2 MPa as determined according to ASTM D 6746-10;
E. adding amine curative to the polymer blend at a temperature less than the peak melting temperature of the polyamide to form a curable polyacrylate elastomer composition;
F. providing a curable fluoroelastomer composition; and
G. forming a laminate structure comprising a layer of the curable polyacrylate elastomer composition and a layer of the curable fluoroelastomer composition.

11. The process for production of a curable laminate of claim 10 wherein the one or more polyamides have a melting peak temperature of at least 200°C.

12. The process for production of a curable laminate of claim 10 or 11 wherein the curable polyacrylate copolymer composition of step E) exhibits an increase in torque, MH-ML, of at least 2.5 dN-m when tested per ISO 6502:1999a using an MDR 2000 from Alpha Technologies operating at 0.5° arc and 180°C for 15 minutes and/or
wherein the curable polyacrylate copolymer composition comprises 20 to 50 wt% polyamide based on the total weight of polyacrylate copolymer and polyamide in the polymer blend and/or
wherein the curable polyacrylate composition comprises polyamide having an inherent viscosity of at least 0.9 dUg measured in accordance with ASTM D2857-95, using 96% by weight sulfuric acid as a solvent at a test temperature of 25°C and/or
wherein the curable polyacrylate composition comprises a polyacrylate copolymer comprising at least 0.5 mol% of amine reactive cure site monomer.

13. The process for production of a curable laminate of any one of claims 10 to 12 wherein the curable fluoroelastomer compound comprises a peroxide curable fluroelastomer.

14. The process for production of a curable laminate of any one of claims 10 to 13 wherein the one or more polyamide comprises polyamide 6/6.

15. The process for production of a curable laminate of any one of claims 10 to 14 wherein the polymer blend composition of step D) has a green strength of less than 1 MPa as determined according to ASTM D 6746-10.

## Patentansprüche

1. Aushärtbares Laminat aus mit Polyamid gefülltem Polyacrylat-Copolymer-Elastomer und Fluorelastomer, umfassend
A. eine Schicht aushärtbare Fluorelastomerzusammensetzung; und
B. eine Schicht aushärtbare Polyacrylat-Copolymer-Elastomer-Zusammensetzung umfassend
a. eine Polymermischung umfassend
i. mindestens ein Polyacrylat-Copolymer-Elastomer umfassend 1) mindestens 50 Gew.-%, auf das Gesamtgewicht des Polyacrylat-Copolymer-Elastomers bezogen, polymerisierte Einheiten mindestens eines Monomers, das die Struktur 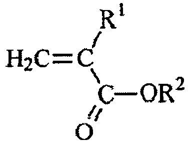 aufweist, wobei R¹ H oder C₁C₁₀-Alkyl ist und R² C₁-C₁₂-Alkyl, C₁-C₂₀-Alkoxyalkyl, C₁-C₁₂-Cyanoalkyl oder C₁-C₁₂-Fluoralkyl ist; und 2) copolymerisierte Einheiten eines Aushärtungsortmonomers ausgewählt aus der Gruppe bestehend aus ungesättigten Carbonsäuren, Anhydriden von ungesättigten Carbonsäuren, ungesättigten Epoxiden und Mischungen von zwei oder mehr davon; und
ii. 10-60 Gew.-% eines oder mehrerer Polyamide, die eine Schmelzspitzentemperatur von mindestens 160 °C aufweisen;
wobei A) die Polymermischung eine Grünfestigkeit von weniger als 2 MPa, wie ASTM D6746-10 entsprechend bestimmt, aufweist, B) das eine oder die mehreren Polyamide als diskontinuierliche Phase in der Polymermischung vorliegen und C) die Gewichtsprozentsätze des einen oder der mehreren amorphen Acrylatcopolymere und von einem oder mehreren Polyamiden auf das kombinierte Gewicht des einen oder der mehreren amorphen Acrylatcopolymere und von einem oder mehreren Polyamiden in der Polymermischung bezogen sind; und
b) ein Amin-Aushärtungsmittel.

2. Aushärtbares Laminat nach Anspruch 1, wobei das eine oder die mehreren Polyamide eine Schmelzspitzentemperatur von mindestens 200 °C aufweisen.

3. Aushärtbares Laminat nach Anspruch 1 oder 2, wobei die aushärtbare Polyacrylat-Copolymer-Zusammensetzung eine Erhöhung des Drehmoments, MH-ML, von mindestens 2,5 dN-m aufweist, wenn es ISO 6502: 1999a unter Anwendung eines MDR 2000 von Alpha Technologies, der 15 Minuten lang mit einem Lichtbogen von 0,5° und bei 180 °C betrieben wird, getestet wird.

4. Aushärtbares Laminat nach Anspruch 1, 2 oder 3, wobei die aushärtbare Polyacrylat-Copolymer-Zusammensetzung 20 bis 50 Gew.-% Polyamid, auf das Gesamtgewicht des Polyacrylatcopolymers und Polyamids in der Polymermischung bezogen, umfasst.

5. Aushärtbares Laminat nach Anspruch 1, 2, 3 oder 4, wobei die aushärtbare Polyacrylatzusammensetzung Polyamid umfasst, das eine inhärente Viskosität von mindestens 0,9 dl/g, ASTM D 2857-95 entsprechend unter Anwendung von 96 Gew.-% Schwefelsäure als Lösungsmittel bei einer Testtemperatur von 25 °C gemessen, aufweist.

6. Aushärtbares Laminat nach Anspruch 1, 2, 3, 4 oder 5, wobei die aushärtbare Polyacrylatzusammensetzung ein Polyacrylatcopolymer umfasst, das mindestens 0,5 Mol-% aminreaktives Aushärtungsortmonomer umfasst.

7. Aushärtbares Laminat nach einem der Ansprüche 1 bis 6, wobei die aushärtbare Fluorelastomerverbindung ein durch Peroxid aushärtbares Fluorelastomer umfasst.

8. Aushärtbares Laminat nach einem der Ansprüche 1 bis 7, wobei das eine oder die mehreren Polyamide Polyamid 6/6 umfassen.

9. Aushärtbares Laminat nach einem der Ansprüche 1 bis 8, wobei die Polymermischung eine Grünfestigkeit von weniger als 1 MPa, wie ASTM D6746-10 entsprechend bestimmt, aufweist.

10. Verfahren für die Herstellung eines aushärtbaren Laminats, das eine Schicht mit Polyamid gefüllter Acrylat-Copolymer-Elastomerzusammensetzung und eine Schicht aushärtbare Fluorelastomerzusammensetzung aufweist, wobei das Verfahren die Schritte umfasst des
A. Bereitstellens eines oder mehrerer Acrylatcopolymerelastomere, umfassend
a) mindestens 50 Gew.-%, auf das Gesamtgewicht des amorphen Acrylatcopolymers bezogen, polymerisierte Einheiten mindestens eines Monomers, das die Struktur 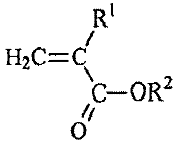 aufweist, wobei R¹ H oder C₁-C₁₀-Alkyl ist und R² C₁-C₁₂-Alkyl, C₁-C₂₀-Alkoxyalkyl, C₁-C₁₂-Cyanoalkyl oder C₁-C₁₂-Fluoralkyl ist; und
b) copolymerisierte Einheiten eines Aushärtungsortmonomers ausgewählt aus der Gruppe bestehend aus ungesättigten Carbonsäuren, Anhydriden von ungesättigten Carbonsäuren, ungesättigten Epoxiden und Mischungen von zwei oder mehr davon;
B. Bereitstellens eines oder mehrerer Polyamide, die eine Schmelzspitzentemperatur von mindestens 160 °C aufweisen;
C. Mischens des Polyacrylat-Copolymer-Elastomers und Polyamids bei einer Temperatur, die höher liegt als die Schmelzspitzentemperaturen des einen oder der mehreren Polyamide, wodurch eine Polymermischung gebildet wird, die 10 Gew.-% bis 60 Gew.-% Polyamid, auf das Gesamtgewicht des einen oder der mehreren Polyamide und von einem oder mehreren Polyacrylaten bezogen, umfasst
D. Kühlens der Polymermischung auf eine Temperatur unterhalb der Kristallisationsspitzentemperatur des einen oder der mehreren Polyamide, wodurch eine mit Polyamid gefüllte Polyacrylat-Copolymer-Elastomer-Zusammensetzung gebildet wird, die i) eine kontinuierliche amorphe Acrylat-Copolymer-Elastomer-Phase und eine diskontinuierliche Polyamidphase umfasst und ii) eine Grünfestigkeit von weniger als 2 MPa, wie ASTM D6746-10 entsprechend bestimmt, aufweist;
E. Zugebens von Amin-Aushärtungsmittel zu der Polymermischung bei einer Temperatur unterhalb der Spitzenschmelztemperatur des Polyamids, um eine aushärtbare Polyacrylat-Elastomer-Zusammensetzung zu bilden;
F. Bereitstellens einer aushärtbaren Fluorelastomerzusammensetzung; und
G. Bildens einer Laminatstruktur umfassend eine Schicht der aushärtbaren Polyacrylat-Elastomer-Zusammensetzung und eine Schicht der aushärtbaren Fluorelastomerzusammensetzung.

11. Verfahren für die Herstellung eines aushärtbaren Laminats nach Anspruch 10, wobei das eine oder die mehreren Polyamide eine Schmelzspitzentemperatur von mindestens 200 °C aufweisen.

12. Verfahren für die Herstellung eines aushärtbaren Laminats nach Anspruch 10 oder 11, wobei die aushärtbare Polyacrylat-Copolymer-Zusammensetzung aus Schritt E) eine Erhöhung des Drehmoments, MH-ML, von mindestens 2,5 dN-m aufweist, wenn es ISO 6502: 1999a entsprechend unter Anwendung eines MDR 2000 von Alpha Technologies, der 15 Minuten lang mit einem Lichtbogen von 0,5° und bei 180 °C betrieben wird, getestet wird, und/oder
wobei die aushärtbare Polyacrylat-Copolymer-Zusammensetzung 20 bis 50 Gew.-% Polyamid, auf das Gesamtgewicht des Polyacrylatcopolymers und Polyamids in der Polymermischung bezogen, umfasst und/oder
wobei die aushärtbare Polyacrylatzusammensetzung Polyamid umfasst, das eine inhärente Viskosität von mindestens 0,9 dl/g, ASTM D 2857-95 entsprechend unter Anwendung von 96 Gew.-% Schwefelsäure als Lösungsmittel bei einer Testtemperatur von 25 °C gemessen, aufweist und/oder
wobei die aushärtbare Polyacrylatzusammensetzung ein Polyacrylatcopolymer umfasst, das mindestens 0,5 Mol-% aminreaktives Aushärtungsortmonomer umfasst.

13. Verfahren für die Herstellung eines aushärtbaren Laminats nach einem der Ansprüche 10 bis 12, wobei die aushärtbare Fluorelatomerverbindung ein durch Peroxid aushärtbares Fluorelastomer umfasst.

14. Verfahren für die Herstellung eines aushärtbaren Laminats nach einem der Ansprüche 10 bis 13, wobei das eine oder die mehreren Polyamide Polyamid 6/6 umfassen.

15. Verfahren für die Herstellung eines aushärtbaren Laminats nach einem der Ansprüche 10 bis 14, wobei die Polymermischungszusammensetzung aus Schritt D) eine Grünfestigkeit von weniger als 1 MPa, wie ASTM D 6746-10 entsprechend bestimmt, aufweist.

## Revendications

1. Stratifié durcissable d'élastomère de copolymère de polyacrylate rempli de polyamide et d'un élastomère fluoré comprenant
A. une couche de composition d'élastomère fluoré durcissable; et
B. une couche de composition d'élastomère de copolymère de polyacrylate durcissable comprenant
a. un mélange de polymères comprenant
i. au moins un élastomère de copolymère de polyacrylate comprenant 1) au moins 50 % en pds, sur la base du poids total de l'élastomère de copolymère de polyacrylate, de motifs polymérisés d'au moins un monomère ayant la structure 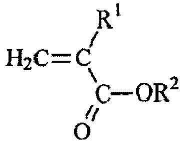 où R¹ est H ou un groupe alkyle en C₁ à C₁₀ et R² est un groupe alkyle en C₁ à C₁₂, alcoxyalkyle en C₁ à C₂₀, cyanoalkyle en C₁ à C₁₂, ou fluoroalkyle en C₁ à C₁₂; et 2) des motifs copolymérisés d'un monomère à site de réticulation sélectionné dans le groupe constitué des acides carboxyliques insaturés, des anhydrides d'acides carboxyliques insaturés, des époxydes insaturés, et des mélanges de deux ou plusieurs d'entre eux; et
ii. de 10 à 60 % en pds d'un ou plusieurs polyamides ayant une température de fusion pic d'au moins 160°C;
où A) le mélange de polymères présente une adhérence initiale inférieure à 2 MPa telle que déterminée selon la norme ASTM D6746-10, B) le un ou plusieurs polyamides sont présents sous la forme d'une phase discontinue dans le mélange de polymères, et C) les pourcentages en poids du un ou plusieurs copolymères d'acrylate amorphe et du un ou plusieurs polyamides sont basés sur le poids combiné du un ou plusieurs copolymères d'acrylate amorphe et du un ou plusieurs polyamides dans le mélange de polymères; et
b) un agent de durcissement type amine.

2. Stratifié durcissable selon la revendication 1 où le un ou plusieurs polyamides présentent une température de fusion pic d'au moins 200°C.

3. Stratifié durcissable selon la revendication 1 ou 2 où la composition de copolymère de polyacrylate durcissable fait preuve d'une augmentation de torque, MH-ML, d'au moins 2,5 dN-m lorsque testée selon la norme ISO 6502:1999a en utilisant un MDR 2000 de chez Alpha Technologies fonctionnant à 0,5° d'arc et 180°C durant 15 minutes.

4. Stratifié durcissable selon la revendication 1, 2 ou 3 où la composition de copolymère de polyacrylate durcissable comprend de 20 à 50 % en pds de polyamide sur la base du poids total du copolymère de polyacrylate et du polyamide dans le mélange de polymères.

5. Stratifié durcissable selon la revendication 1, 2, 3 ou 4 où la composition de polyacrylate durcissable comprend du polyamide ayant un indice logarithmique de viscosité d'au moins 0,9 dl/g mesuré selon la norme ASTM D2857-95, en utilisant 96 % en poids d'acide sulfurique comme solvant à une température de test de 25°C.

6. Stratifié durcissable selon la revendication 1, 2, 3, 4 ou 5 où la composition de polyacrylate durcissable comprend un copolymère de polyacrylate comprenant au moins 0,5 % en mole d'un monomère à site de réticulation réactif de type amine.

7. Stratifié durcissable selon l'une quelconque des revendications 1 à 6 où le composé élastomère fluoré durcissable comprend un élastomère fluoré durcissable type peroxyde.

8. Stratifié durcissable selon l'une quelconque des revendications 1 à 7 où le un ou plusieurs polyamides comprennent du polyamide 6/6.

9. Stratifié durcissable selon l'une quelconque des revendications 1 à 8 où le mélange de polymères présente une adhérence initiale inférieure à 1 MPa telle que déterminée selon la norme ASTM D 6746-10.

10. Procédé de production d'un stratifié durcissable ayant une couche de composition d'élastomère de copolymère d'acrylate remplie de polyamide et une couche de composition d'élastomère fluoré durcissable, le procédé comprenant les étapes de
A. fourniture d'un ou plusieurs élastomères de copolymère d'acrylate comprenant
a) au moins 50 % en pds, sur la base du poids total du copolymère d'acrylate amorphe, de motifs polymérisés d'au moins un monomère ayant la structure 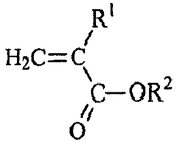 où R¹ est H ou un groupe alkyle en C₁ à C₁₀ et R² est un groupe alkyle en C₁ à C₁₂, alcoxyalkyle en C₁ à C₂₀, cyanoalkyle en C₁ à C₁₂, ou fluoroalkyle en C₁ à C₁₂; et
b) des motifs copolymérisés d'un monomère à site de réticulation sélectionné dans le groupe constitué des acides carboxyliques insaturés, des anhydrides d'acides carboxyliques insaturés, des époxydes insaturés, et des mélanges de deux ou plusieurs d'entre eux;
B. fourniture d'un ou plusieurs polyamides ayant une température de fusion pic d'au moins 160°C;
C. mélange de l'élastomère de copolymère de polyacrylate et de polyamide à une température supérieure aux températures de fusion pics de l'un ou des plusieurs polyamides, formant de là un mélange de polymères comprenant de 10 % en pds à 60 % en pds de polyamide sur la base du poids total du un ou des plusieurs polyamides et du un ou plusieurs polyacrylates;
D. refroidissement du mélange de polymères à une température située en-dessous des températures de cristallisation pics du un ou plusieurs polyamides, formant de là une composition d'élastomère de copolymère de polyacrylate remplie de polyamide qui i) comprend une phase élastomère de copolymère d'acrylate amorphe continue et une phase discontinue de polyamide et ii) présente une adhérence initiale inférieure à 2 MPa telle que déterminée selon la norme ASTM D 6746-10;
E. addition d'un agent de durcissement type amine au mélange de polymères à une température inférieure à la température de fusion pic du polyamide pour former une composition d'élastomère de polyacrylate durcissable;
F. fourniture d'une composition d'élastomère fluoré durcissable; et
G. formation d'une structure stratifiée comprenant une couche de la composition d'élastomère de polyacrylate durcissable et une couche de la composition d'élastomère fluoré durcissable.

11. Procédé de production d'un stratifié durcissable selon la revendication 10 où le un ou plusieurs polyamides présentent une température de fusion pic d'au moins 200°C.

12. Procédé de production d'un stratifié durcissable selon la revendication 10 ou 11 où la composition de copolymère de polyacrylate durcissable de l'étape E) fait preuve d'une augmentation de torque, MH-ML, d'au moins 2,5 dN-m lorsque testé selon la norme ISO 6502:1999a en utilisant un MDR 2000 de chez Alpha Technologies fonctionnant à 0,5° d'arc et 180°C durant 15 minutes et/ou
où la composition de copolymère de polyacrylate durcissable comprend de 20 à 50 % en pds de polyamide sur la base du poids total du copolymère de polyacrylate et du polyamide dans le mélange de polymères et/ou
où la composition de polyacrylate durcissable comprend du polyamide ayant un indice logarithmique de viscosité d'au moins 0,9 dl/g mesuré selon la norme ASTM D2857-95, en utilisant 96 % en poids d'acide sulfurique comme solvant à une température de test de 25°C et/ou
où la composition de polyacrylate durcissable comprend un copolymère de polyacrylate comprenant au moins 0,5 % en mole d'un monomère à site de réticulation réactif type amine.

13. Procédé de production d'un stratifié durcissable selon l'une quelconque des revendications 10 à 12 où le composé d'élastomère fluoré durcissable comprend un élastomère fluoré durcissable type peroxyde.

14. Procédé de production d'un stratifié durcissable selon l'une quelconque des revendications 10 à 13 où le un ou plusieurs polyamides comprennent du polyamide 6/6.

15. Procédé de production d'un stratifié durcissable selon l'une quelconque des revendications 10 à 14 où la composition de mélange de polymères de l'étape D) présente une adhérence initiale inférieure à 1 MPa telle que déterminée selon la norme ASTM D 6746-10.
